(19) Europäisches Patentamt
European Patent Office
Office européen des brevets

(11) **EP 4 745 273 A1**

(12) **EUROPEAN PATENT APPLICATION**
published in accordance with Art. 153(4) EPC

(43) Date of publication:
**20.05.2026   Bulletin 2026/21**

(21) Application number: **24839773.9**

(22) Date of filing: **09.07.2024**

(51) International Patent Classification (IPC):
*C25B 11/031* (2021.01)      *C25B 11/052* (2021.01)
*C25B 11/061* (2021.01)      *C25B 11/077* (2021.01)
*C25B 11/091* (2021.01)

(52) Cooperative Patent Classification (CPC):
**C25B 11/031; C25B 11/052; C25B 11/061;**
**C25B 11/077; C25B 11/091;** Y02E 60/36

(86) International application number:
**PCT/JP2024/024858**

(87) International publication number:
**WO 2025/013883 (16.01.2025 Gazette 2025/03)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **11.07.2023   JP 2023113836**

(71) Applicants:
• **Mitsui Kinzoku Company, Limited**
  **Tokyo 141-8584 (JP)**
• **INSTITUTE OF SCIENCE TOKYO**
  **Tokyo 152-8550 (JP)**

(72) Inventors:
• **KOMODA, Yasuo**
  **Ageo-shi, Saitama 362-0021 (JP)**

• **SATO, Jun**
  **Ageo-shi, Saitama 362-0021 (JP)**
• **KITABATAKE, Takuya**
  **Ageo-shi, Saitama 362-0021 (JP)**
• **MOGI, Satoshi**
  **Ageo-shi, Saitama 362-0021 (JP)**
• **SHIBATA, Yasuhiro**
  **Ageo-shi, Saitama 362-0021 (JP)**
• **YAMAGUCHI, Takeo**
  **Tokyo 152-8550 (JP)**
• **GANGADHARAN, Pranav Kanjirathingal**
  **Tokyo 152-8550 (JP)**
• **KUROKI, Hidenori**
  **Tokyo 152-8550 (JP)**

(74) Representative: **Novagraaf Technologies**
  **2 rue Sarah Bernhardt**
  **CS90017**
  **92665 Asnières-sur-Seine Cedex (FR)**

(54) **METAL NONWOVEN FABRIC FOR WATER ELECTROLYSIS ELECTRODE**

(57)      A metallic nonwoven fabric composed of metal fibers for water electrolysis electrodes. The metal fibers each include a core containing a first metal and a coating on the core containing a second metal and/or its compound. The first metal includes one or two or more of metal elements. The second metal and/or its compound includes an elemental metal including one or two or more of metal elements and/or a compound containing at least one of the metal elements. The second metal and/or its compound exhibits catalytic activity and corrosion resistance in a water electrolysis reaction environment. The metallic nonwoven fabric has an M2/S ratio of 0.01 to 20.0 $g/m^2$, wherein M2 is the sum of the masses of the second metal and the metal element present in the form of the compound of the second metal in the coating per unit mass of the metallic nonwoven fabric; and S is the geo-metric area of the surface of the core per unit mass of the metallic nonwoven fabric.

Fig. 1

EP 4 745 273 A1

## Description

### Background Art

The present invention relates to a metallic nonwoven fabric for water electrolysis electrodes.

With the recent increasing environmental concern, expectations for hydrogen as an energy source have been rising. Hydrogen obtained by water electrolysis using a renewable energy is a clean energy source that does not emit carbon dioxide. Consequently, there has been significant development of systems for hydrogen production, including electrochemical equipment. This has led to an increased demand for high-performance electrode catalysts for water electrolysis.

For instance, patent literature 1 listed below proposes an electrode catalyst composed of a copper-containing base having thereon a copper oxide and a complex oxide of two metals. This electrode catalyst is described as having long-term stability because it is less likely to cause an increase in overpotential when used as an electrode for hydrogen production.

Patent literature 2 discloses a method for producing an anode for water electrolysis. The anode comprises a spongy base formed of nickel wire, called a nickel foam, having formed thereon a nanosheet containing NiFe hydroxide and Ce oxide.

Non-patent literature 1 describes the use of a porous felt electrode made of nickel microfibers in alkaline water electrolysis. According to this article, because the nickel microfiber felt balances the electrode surface area with the ability to remove bubbles, oxygen evolution occurs efficiently in alkaline water electrolysis, thereby improving the hydrogen production rate at the counter electrode and increasing the hydrogen production per unit area. This leads to the reduction in equipment cost of water electrolysis systems.

### Citation List

Patent Literature

Patent literature 1: JP 2021-70864A
Patent literature 2: CN 108447703A

Non-patent Literature:

Non-patent literature 1: F. Yang, et al., Adv. Energy Matter, 2020, 10, 2001174

### Summary of Invention

The inventors' investigation revealed that the electrodes using a nickel foam have room for improvement in catalytic activity. One of the known approaches to enhancing the catalytic activity is to increase the surface area of the electrode. The inventors have studied the use of nonwoven fabric formed of nickel wire with small diameters. However, they have considered that this material is not suited for water electrolysis because of the established correlation between decreasing diameters and higher electrical resistance. Then, the inventors have studied the use of nonwoven fabric made of copper whose electrical resistance is lower than that of nickel. However, such nonwoven fabric was not regarded as being sufficiently resistant to corrosion in a water electrolysis reaction environment.

Accordingly, an object of the invention is to provide a metallic nonwoven fabric that exhibits sufficient catalytic activity and corrosion resistance in a water hydrolysis reaction environment.

As a result of extensive investigations to accomplish the above object, the inventors have found that a metallic nonwoven fabric having the following characteristics enhances catalytic activity and corrosion resistance: the nonwoven fabric is formed of fibers with a core and a coating; the core and coating are each made of a specific combination of a metal and/or its compound; and the metal element present in the core has a mass within a specific range.

The invention was completed on the basis of the above findings. The invention accomplishes the above object by providing a metallic nonwoven fabric for a water electrolysis electrode comprising metal fibers,

wherein the metal fibers comprise:

a core comprising a first metal; and
a coating disposed on a surface of the core and comprising a second metal and/or a compound of the second metal,

the first metal comprises one or two or more of metal elements,
the second metal and/or the compound of the second metal comprises one or two or more of metal elements and/or a compound containing one or two or more of the metal elements,
the second metal and/or the compound of the second metal has catalytic activity and corrosion resistance in a water electrolysis reaction environment, and
the metallic nonwoven fabric has an M2/S ratio within the range of 0.01 to 20.0 $g/m^2$,
wherein M2 is the sum of the mass of the second metal and the mass of the metal element present in the form of the compound of the second metal in the coating per unit mass of the metallic nonwoven fabric; and
S is a geometric area of the surface of the core per unit mass of the metallic nonwoven fabric.

The invention also provides a metallic nonwoven fabric comprising metallic fibers,

wherein the metallic fibers comprise:

a core comprising a first metal; and
a coating disposed on a surface of the core and comprising a second metal and/or a compound of the second metal,

the first metal comprises one or two or more of metal elements,
the second metal and/or the compound of the second metal comprises one or two or more of metal elements and/or a compound containing one or two or more of the metal elements,
the second metal and/or the compound of the second metal has catalytic activity and corrosion resistance in a water electrolysis reaction environment,
and the coating has a thickness T of 5 to 1,500 nm.

**Brief Description of Drawings**

[Fig. 1] Figure 1 is a schematic illustration of a scanning electron microscopic (SEM) image of a cross-section of metallic fibers constituting the metallic nonwoven fabric of the invention, prepared by cutting perpendicular to the longitudinal direction of the fibers.
[Fig. 2] Figure 2 is a graph showing the results of the electrochemical durability test on the metallic nonwoven fabric for water electrolysis electrodes prepared in Example 1.
[Fig. 3] Figure 3 is a graph showing the results of the electrochemical durability test on the metallic nonwoven fabric for water electrolysis electrodes prepared in Example 4.
[Fig. 4] Figure 4 is a graph showing the results of the electrochemical durability test on the metallic nonwoven fabric for water electrolysis electrodes prepared in Example 6.
[Fig. 5] Figure 5 shows the first and second cycles of the cyclic voltammogram of the copper nonwoven fabric electrode without a coating prepared in Comparative Example 1.

**Description of Embodiments**

The invention will be elaborated upon on the basis of its preferred embodiments. The invention relates to a metallic nonwoven fabric for water electrolysis electrodes. The metallic nonwoven fabric of the invention includes metal fibers made of a metal or a metal compound. Throughout the description, the term "metal fiber" refers to either an individual fiber or a collective entity of multiple fibers, which depends on the context.
The metallic nonwoven fabric of the invention is well-suited as a water electrolysis electrode catalyst.
A metallic nonwoven fabric is a sheet-like collective entity consisting mainly of metal fibers. As used herein, the phrase "consist mainly of metal fibers" means that the metal fiber content in the metallic nonwoven fabric is at least 50 mass%. In addition to the metal fibers, the metallic nonwoven fabric may contain other constituent materials, including organic fiber, carbon fiber, and oxide fiber. Furthermore, the metallic nonwoven fabric may contain a non-fibrous substance. Thus, the metallic nonwoven fabric may be a sheet-like collective body composed of a plurality of constituent materials including metal fiber. Nevertheless, to maximize the inherent advantages of the metallic nonwoven fabric, it is desirable for the metallic nonwoven fabric to consist of metal fibers. The phrase "consist of" as used herein excludes the intentional addition of a component other than the metal fiber and permits the presence of trace components unavoidably incorporated during the production processes of the metallic nonwoven fabric.

The individual metal fiber composing the metallic nonwoven fabric includes a core and a coating disposed on a surface of the core.

The core of the metal fiber contains a first metal contains a first metal, and is preferably composed of the first metal and an unavoidable impurity.

The first metal includes one or two or more of metal elements. Examples of the first metal include copper, silver, gold, aluminum, magnesium, nickel, cobalt, tin, iron, zinc, and an alloy containing at least one of these metals. A core containing copper or a copper alloy as a matrix is preferred among them. The phrase "copper or a copper alloy as a matrix" means that the proportion of copper in the metal fiber is at least 60 mass%.

The coating of the metal fiber contains a second metal and/or a compound thereof. If the core contains a substance other than the second metal and its compound, such a substance is preferably only an unavoidable impurity. The second metal is preferably different from the first metal in terms of improved catalytic activity and corrosion resistance.

The second metal and/or its compound includes one or two or more of metal elements and/or a compound containing one or two or more of the metal elements. In other words, the "metal elements" as referred to here are divided into those existing in an elemental form (i.e., those categorized in the second metal) in the coating and those existing in a compound form (i.e., those categorized in the second metal compound) in the coating.

As stated, the metallic nonwoven fabric of the invention is suited for use as a catalyst for water electrolysis reaction. Seeing that the second metal and/or its compound is in the surface of the metal fiber, it preferably exhibits not only catalytic activity but also corrosion resistance in a water electrolysis reaction environment, thereby enhancing corrosion resistance of the metallic nonwoven fabric in a water electrolysis reaction environment as well as imparting catalytic activity to the metallic nonwoven fabric. The water electrolysis reaction environment includes a solution with a pH of 5 or higher. From this viewpoint, the second metal and/or its compound preferably contains one or two or more of metal elements selected from nickel, cobalt, iron, molybdenum, tungsten, vanadium, zirconium, titanium, aluminum, platinum, iridium, palladium, rhodium, gold, and silver, more preferably one or two or more of metal elements selected from nickel, cobalt, iron, molybdenum, tungsten, platinum, and iridium.

Examples of the metal compound present in the coating include compounds formed by the oxidation of the second metal in the air, such as oxides, hydroxides, and oxyhydroxides; phosphorus compounds, and sulfur compounds, with hydroxides and oxyhydroxides being preferred.

The second metal and/or its compound is preferably selected appropriately according to the type of the water electrolyzer and reaction employed. For instance, when the metallic nonwoven fabric of the invention is used as a catalyst of an anode (the electrode where oxygen evolution occurs) in an alkaline water electrolyzer or an anion exchange membrane cell, the second element and/or its compound preferably contain one or two or more of one metal elements selected from iridium, copper, cobalt, iron, nickel, ruthenium, manganese, cerium, palladium, aluminum, lead, titanium, strontium, barium, praseodymium, tungsten, vanadium, and zirconium, more preferably one or two or more of metal elements selected from iridium, copper, cobalt, iron, nickel, ruthenium, manganese, cerium, palladium, aluminum, lead, titanium, strontium, barium, and praseodymium, and even more preferably one or two or more of metal elements selected from iridium, copper, cobalt, iron, nickel, ruthenium, and manganese.

When the metallic nonwoven fabric of the invention is used as a catalyst for a cathode (the electrode where hydrogen evolution reaction occurs) in the same type of electrolysis cell as described above, the second element and/or its compound preferably contains one or two or more of metal elements selected from platinum, palladium, ruthenium, iron, nickel, cobalt, copper, tungsten, molybdenum, cerium, lanthanum, titanium, aluminum, gold, and silver, more preferably one or two or more of metal elements selected from platinum, palladium, ruthenium, iron, nickel, cobalt, copper, tungsten, molybdenum, cerium, lanthanum, titanium, and aluminum, and even more preferably one or two or more of metal elements selected from platinum, palladium, ruthenium, iron, nickel, cobalt, copper, tungsten, and molybdenum.

Whether the metallic nonwoven fabric of the invention is used as an anode catalyst or a cathode catalyst, the first element preferably contains one or two or more of metal elements selected from copper, silver, gold, aluminum, magnesium, nickel, cobalt, tin, iron, and zinc.

When the metallic nonwoven fabric of the invention is used as an anode catalyst in a proton exchange membrane (PEM) water electrolyzer, the second metal and/or its compound preferably contains one or two or more of metal elements selected from ruthenium, iridium, platinum, palladium, rhodium, tin, tantalum, molybdenum, cobalt, manganese, niobium, titanium, tungsten, antimony, silver, copper, nickel, iron, strontium, lithium, thulium, erbium, yttrium, and praseodymium, more preferably one or two or more of metal elements selected from ruthenium, iridium, platinum, palladium, rhodium, tin, tantalum, molybdenum, cobalt, manganese, niobium, titanium, tungsten, and antimony, and even more preferably one or two or more of metal elements selected from ruthenium, iridium, platinum, palladium, rhodium, tin, tantalum, and molybdenum.

When the metallic nonwoven fabric of the invention is used as a cathode catalyst in a PEM water electrolyzer, the second metal and/or its compound preferably contains one or two or more of metal elements selected from platinum, iridium, palladium, ruthenium, rhodium, molybdenum, tungsten, titanium, vanadium, selenium, tantalum, cobalt, nickel, copper, iron, and silicon, more preferably one or two or more of metal elements selected from platinum, iridium, palladium, ruthenium, rhodium, molybdenum, tungsten, titanium, vanadium, selenium, tantalum, cobalt, nickel, and copper, and even more preferably one or two or more of metal elements selected from platinum, iridium, palladium, ruthenium, rhodium, molybdenum, and tungsten.

Whether the metallic nonwoven fabric of the invention is used as an anode catalyst or a cathode catalyst, the first element preferably contains one or two or more of metal elements selected from copper, silver, gold, aluminum, magnesium, nickel, cobalt, tin, iron, and zinc.

In order to balance the catalytic activity, the coverage of the coating, and the electrical conductivity of the entire metallic nonwoven fabric, the coating preferably has an M2/S ratio within a specific range, wherein M2 is the sum of the mass of the second metal and the mass of the metal element present in the form of the second metal compound in the coating per unit mass of the metallic nonwoven fabric; and S is the geometric area of the core surface per unit mass of the metallic nonwoven fabric.

Setting the M2/S value to or above a specific lower limit ensures a sufficient amount of the second metal element with high catalytic activity in the metallic nonwoven fabric, thereby improving the catalytic activity of the metallic nonwoven fabric. Secondly, the metal element in the coating sufficiently covers the surface of the metal fibers made of the metal that constitutes the core, thereby enhancing the corrosion resistance of the fabric.

In addition, the inventors have ascertained that the ratio of the second metal present in an elemental form on and near the outermost surface of the coating increases with the M2/S ratio, i.e., the thickness of the coating. Generally, the electrical conductivity of a metal is highest in its elemental state and lower in a compound form, such as an oxide or hydroxide. Many transition metal elements undergo spontaneous oxidization at the surface when exposed to air or an aqueous solution or at the interface with a proton or hydroxide ion conductor, forming a compound, such as an oxide, a hydroxide or oxyhydroxide. As a result, a low-electroconductive layer forms on the electrode surface. Therefore, thickening the coating increases the ratio of the metal in its elemental form with higher electrical conductivity on and near the outer surface of the coating. This, in turn, improves the catalytic activity of the metallic nonwoven fabric of the invention.

Setting the M2/S value to or below a specific upper limit minimizes the use of the second metal while ensuring sufficient corrosion resistance of the metallic nonwoven fabric. Secondly, the reduction in gas diffusibility of the metallic nonwoven fabric due to an excessive coating thickness can be controlled. Thirdly, a sufficient volume ratio of the core containing the first metal is secured. This leads to enhanced electrical conductivity of the metallic nonwoven fabric of the invention, particularly when a metal with high electrical conductivity is used as the first metal.

From the above viewpoint, the M2/S ratio is preferably 0.01 to 20.0 g/m$^2$, more preferably 0.05 to 18.0 g/m$^2$, even more preferably 0.10 to 15.0 g/m$^2$, and still more preferably 0.20 to 8.0 g/m$^2$.

M2 and S used to calculate M2/S are determined as follows. A section of a metallic nonwoven fabric was prepared by cutting it perpendicular to the lengthwise direction.

Assuming the metal fiber to be a perfect cylinder, the geometric area S of the surface of the core per unit mass of the metallic nonwoven fabric can be calculated by regarding only the lateral surface as "the surface" of the fiber because of the high aspect ratio of the fiber. Specifically, the area S is calculated according to formula (1) below. This calculation uses the mass M1 of the first metal contained in the core per unit mass of the fabric, the radius r of the core measured on the basis of the SEM image of the section of the fabric, and the density d of the core:

$$S = 2 \times M1/(r \times d) \qquad\qquad (1)$$

The mass M1 of the first metal per unit mass of the fabric and the total mass M2 of the second metal and the metal element that is present in the form of the second metal compound are determined by, for example, dissolving a unit mass of the fabric in a strong acid and analyzing the concentrations of the metal elements in the solution by inductively coupled plasma-atomic emission spectrometry. X-ray fluorescence analysis (XRF) can also be used for evaluation.

While the coating contains the second metal, a compound of the second metal, or both, it is preferable for the coating to contain at least the second metal in terms of enhancing electrical conductivity. Specifically, the coating is preferably formed of the second metal with an unavoidable impurity, or a combination of the second metal and its compound, or a combination of the second metal and its compound with an unavoidable impurity. The presence of the second metal in the coating is believed to enhance the electrical conductivity of the coating, thereby improving the catalytic activity.

To make the above-described effects more noticeable, the proportion of the metal element present as the second metal relative to the sum of the metal element present as the second metal and the metal element present as the second metal compound in the coating is preferably at least 2.0 at.%, more preferably 2.5 at.% or higher, and even more preferably 3.0 at.% or higher. This proportion can be obtained by the mathematical formula shown below using the peak areas determined by X-ray photoelectron spectroscopy (XPS). For instance, when the second metal element is nickel, the calculation can be performed by resolving the Ni 2p peaks around 850 eV to 860 eV. When the coating contains a plurality of the second metal elements, it is preferable to resolve the photoelectron peaks of all such elements and calculate the proportion of the metal elements present as the second metal relative to the sum of the metal elements present as the second metal and the metal elements present as the second metal compounds.

(Proportion of the metal element present as the second metal relative to the sum of the metal element present as the second metal and the metal element present as the second metal compound) = (peak area of the metal element present as the second metal)/((peak area of the metal element present as the second metal) + (peak area of the metal element present as the second metal compound))

To improve the catalytic activity and corrosion resistance of the metallic nonwoven fabric, it is preferable that the coating cover the core all over. The degree of coverage can be evaluated by analyzing the chemical composition of the metal fiber surface using XPS. Specifically, the proportion of the metal element present as the first metal exposed on the outermost surface of the metal fibers can be assessed by calculating the core-level atomic percentage of the metal element present as the first metal relative to the total of the metal element present as the first metal, the metal element present as the second metal, and the metal element present as the second metal compound using XPS. The proportion of the first metal determined by XPS is preferably 5.0 at.% or less, more preferably 4.0 at.% or less, even more preferably 3.0 at.% or less, and still more preferably 2.5 at.% or less. Ideally, it is 0 at.%.

The details of the conditions of XPS analysis will be explained in Examples hereinafter given.

The first metal preferably has higher electrical conductivity than the second metal and/or its compound. Specifically, the ratio of the electrical conductivity $\sigma 1$ (S/m) (at 20°C) of the first metal to the electrical conductivity $\sigma 2$ (S/m) (at 20°C) of the second metal and/or its compound, $\sigma 1/\sigma 2$, is preferably 1.05 or higher, more preferably 1.50 or higher, and even more preferably 2.00 or higher. The electrical conductivity relationship between the first metal and the second metal and/or its compound enables the electrical resistance of the entire metallic nonwoven fabric to be reduced.

The metallic nonwoven fabric may be composed of either a single type of metal fibers or a plurality of types of metal fibers that differ in the metal element present in the core or coating.

The metallic nonwoven fabric is fabricated of randomly deposited metal fibers, which are consolidated by entanglement and/or fusion with each other to maintain the form of fabric. The metal fibers making up the metallic nonwoven fabric are randomly deposited, creating pores or interstices between them. These interstices are interconnected in the thickness direction of the fabric. Consequently, the metallic nonwoven fabric exhibits gas diffusibility in its thickness direction. The metallic nonwoven fabric of the invention with gas diffusibility exhibits catalytic action when used as a water electrolysis electrode catalyst both on the surface and internally, thereby demonstrating enhanced catalytic activity.

The metallic nonwoven fabric may have either a single layer structure or an integral laminate structure composed of a plurality of layers that may be the same or different. As used herein, the term "the same layers" means that the layers are made of the same metal fibers. These metallic nonwoven fabrics can be produced advantageously by the method described below.

The core of the individual metal fibers preferably has an average diameter D, hereinafter an average core diameter D, of 20 nm to 10.0 $\mu$m, more preferably 20 nm to 6.00 $\mu$m, even more preferably 30 nm to 3.00 $\mu$m, still more preferably 120 nm to 2.50 $\mu$m, and yet more preferably 0.50 to 2.00 $\mu$m. The metal fibers with an average core diameter D of 20 nm or more exhibit increased electrical conductivity. The metal fibers with an average core diameter D of not more than 10.0 $\mu$m exhibit an increased specific surface area to enhance the catalytic activity.

The coating of the individual metal fibers preferably has a thickness T, hereinafter a coating thickness T, of 5 to 1500 nm, more preferably 5 to 1000 nm, even more preferably 10 to 800 nm, still more preferably 40 to 500 nm, yet more preferably 70 to 500 nm, and most preferably 100 to 500 nm. With the coating thickness T of at least 5 nm, the proportion of the exposed portion of the core uncovered by the coating reduces to improve the corrosion resistance of the metallic nonwoven fiber of the invention. When the coating thickness T is 1500 nm or less, the influence of the electron conduction resistance of the second metal with lower electrical conductivity reduces, thereby improving the catalytic activity of the nonwoven fabric of the invention.

To ensure optimal balance between electrical conductivity and corrosion resistance in the metallic nonwoven fabric, the ratio of the coating thickness T to the average core diameter D, T/D, is preferably 0.01 to 1.00, more preferably 0.01 to 0.70, and even more preferably 0.02 to 0.40. When the T/D is 0.01 or higher, a sufficient amount of the second metal is present in the coating. When the T/D is 1.00 or lower, the volume ratio of the coating to the core is not excessive, allowing the low-resistance properties of the core to significantly impact electrical conductivity of the entire metallic nonwoven fabric. When the first metal in the core differs from the second metal or its compound in the coating, the average electrical conductivity $\sigma$av of the entire metallic nonwoven fabric inclusive of the coating increases with the volume ratio of the first metal with high electrical conductivity to the entire fabric. This allows for highly efficient water electrolysis, thereby improving the catalytic activity of the nonwoven fabric of the invention.

It is clear from formula (2) below that the average electrical conductivity σav of the entire metallic nonwoven fabric increases when the T/D ratio is set low enough. That is, the average electrical conductivity σav (20°) of the entire fabric, including the coating, is calculated using formula (2):

$$\sigma_{av} = \sigma 2 + (\sigma 1 - \sigma 2)/(R + 1) \qquad (2)$$

wherein σ1 and σ2 are as defined above; and R represents a coating to core volume ratio. R is calculated using formula (3):

$$R = \{(T + D/2)^2 - (D/2)^2\}/((D/2)^2) = (2T/D + 1)^2 - 1 \qquad (3)$$

As clearly understood from formulae (2) and (3), as long as the electrical conductivity of the first metal is higher than that of the second metal and/or its compound, (σ1 - σ2) is positive, and R becomes smaller as T/D decreases. Consequently, the average electrical conductivity σav increases with a decrease of T/D.

To secure the mechanical strength and facilitate producing the metallic nonwoven fabric as well as improve the catalytic activity, the metal fibers preferably have an average length of 0.5 to 5,000 μm, more preferably 0.5 to 2,000 μm, even more preferably 1 to 500 μm, still more preferably 3 to 200 μm, yet more preferably 3 to 150 μm, still even more preferably 3 to 90 μm, and most preferably 25 to 90 μm.

The average core diameter, coating thickness, and average length of the metal fibers of the metallic nonwoven fabric may be the same or different on opposite sides of the fabric. When the fabric is observed along its thickness direction, each of the average core diameter, coating thickness, and average length of the metal fibers may vary stepwise, continuously, or both. Such a structure can be formed, for example, by using two or more types of metal fibers.

The metal fibers that form the metallic nonwoven fabric are preferably very thin and long, with their average core diameter, coating thickness, and average length within the respective ranges mentioned above. This configuration enhances the gas diffusibility of the metallic nonwoven fabric, thereby increasing the electrolytic current. Additionally, this configuration allows for easy control of these characteristic values of the metal fibers as well as enhancement of their handling properties.

From the above viewpoint, the metal fiber preferably has an aspect ratio (average length of metal fiber/average core diameter D of metal fiber) of 5 to 5,000, more preferably 20 to 3,000, even more preferably 20 to 1,500.

The average core diameter D and coating thickness T can be measured as follows.

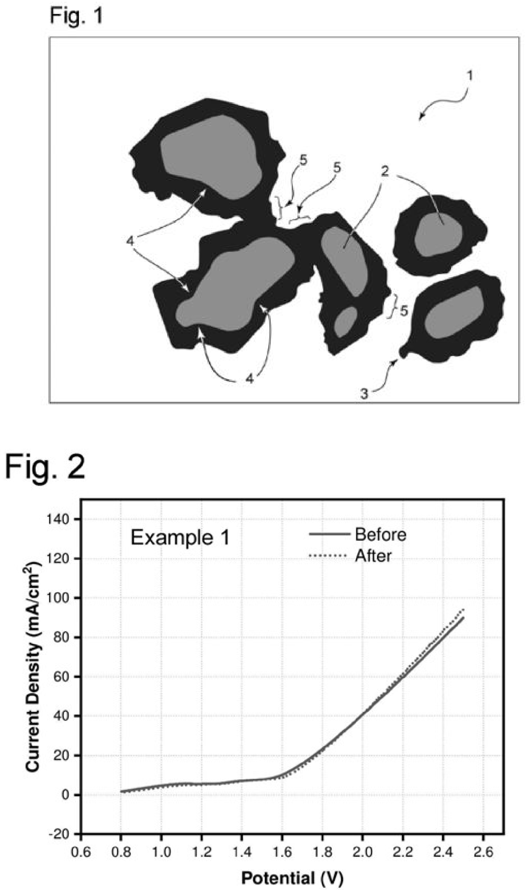

A metallic nonwoven fabric is cut perpendicular to the lengthwise direction of the metal fibers with scissors, an ion beam, or a similar tool, and the cross-section is observed under an SEM. The fabric sample may first be embedded in a resin, such as polyepoxy, before cutting. The SEM observation should be performed at a magnification level that allows for easy measurement of the average core diameter D and coating thickness T, specifically 1,000x to 10,000x. Fig. 1 shows a schematic illustration of an SEM image of metallic fibers 1 making up a metallic nonwoven fabric. The metal fibers 1 shown in Fig. 1 are each composed of a core 2 and a coating 3 on the surface of the core 2.

In measuring the average core diameter D, 20 to 100 cores 2 are randomly selected. For each core 2, the longest imaginary segment connecting two points on the contour is considered. Then, the longest of segments connecting other two points on the contour that is perpendicular to the longest imaginary segment is considered. The length of this segment is measured for all the selected cores. The arithmetic average of these measurements is defined as the average core diameter D.

In the measurement of the thickness T of the coating 3, a total of 20 to 100 measurement points are randomly selected along the contours of cores 2. The distance from each point to the outer surface of the respective coating 3 is measured. The arithmetic average of these distances is defined as the coating thickness T. Note that the measurement points must not be selected in the vicinity of the areas specified in (1) through (4) below. Image analysis software, such as Mac-View Version. 4 (particle size distribution analysis software from Mountech Co., Ltd.), can be utilized in the measurement of the average diameter D and thickness T.

(1) Area where the surface (contour) of the core 2 is concave (areas 4 in Fig. 1)
(2) Area where two or more coatings 3 are in contact with each other, obscuring their boundaries (areas 5 in Fig. 1)
(3) Area where the outer contour of the coating 3 is unclear
(4) Area where the coating 3 is missing (the core 2 is not completely covered by the coating 3)

The average length of the metal fibers constituting the metallic nonwoven fabric can be measured as follows. First, the metallic nonwoven fabric is observed under an SEM at a magnification level that allows for easy observation of the metal fiber lengths, i.e., 200x to 2,000x. Twenty metal fibers that are not entangled with other metal fibers and are therefore observable individually are randomly selected from the SEM image, and their lengths are measured. If any metal fiber is cut off in a single SEM image, a complete view can be created by panoramically stitching together multiple consecutive SEM images to measure the length of that metal fiber. The arithmetic average of these lengths is defined as the average metal fiber length. Image analysis software, such as Mac-View Version. 4 (particle size distribution analysis software from Mountech Co., Ltd.), may be used in the measurement of the average length.

The average core diameter and coating thickness of the metal fibers constituting the metallic nonwoven fabric may be substantially uniform over its entire length or not be uniform, assuming a bead-like form. The metal fiber is preferably tapered at one or both ends. "Tapered" means gradually becoming thinner toward one end or both ends. Having at least one tapered end, the metal fibers have an increased contact area with one another, which is advantageous for reducing electrical resistance and enhancing the mechanical strength of the fabric. Additionally, metal fibers with at least one tapered end exhibit reduced unevenness on their contact surfaces compared with those with a uniform diameter up to their both ends. Consequently, variation in size of the interstices in the fabric can be controlled, ensuring stable catalytic activity.

To make this advantage more pronounced, the included angle of the tapered end is preferably 90°C or less, more preferably 80°C or less, even more preferably 70°C or less, still more preferably 60°C or less, yet more preferably 50°C or less, and most preferably 45°C or less.

The included angle of the tapered fiber end is determined as follows. First, the metal fiber diameter, i.e., the sum of the core diameter and the coating thicknesses, is measured through SEM observation at a magnification of 1,000x to 10,000x by the above-described method. Second, an arc, with the same diameter as the metal fiber diameter, is drawn centered at the tip of the tapered end of the fiber, intersecting the fiber's circumference at two points. The angle between two straight lines connecting the tip of the tapered end and the two intersecting points is defined as the included angle. When the tip of the tapered end appears as a straight or nearly straight line when viewed from the side, the midpoint of the line is regarded as the tip position. If the straight or nearly straight line is longer than half of the diameter of the metal fiber, this fiber is excluded from the measurement. The measurement is taken on at least ten metal fibers, and the arithmetic average of the measurements is defined as the included angle of the tapered end.

The individual metal fiber is typically a strand extending in one direction, but it may also have a branched structure composed of a main strand extending in one direction and a side strand branching off from the main strand. In order to control the size of the interstices among metal fibers, thereby improving gas diffusibility of the metallic nonwoven fabric, non-branched metal fibers composed solely of a main strand are preferred. On the other hand, considering that a bulkier metallic nonwoven fabric has an increased contact area with a liquid, metal fibers having one or two or more of branches are preferred. The metallic nonwoven fabric may be made of either non-branched metal fibers or branched metal fibers, or a combination of both.

It is preferable that at least 20% in number of the total metal fibers constituting the metallic nonwoven fabric have a curved portion with a curvature radius of five or less times their length. When the metal fibers making up the metallic nonwoven fabric intrinsically include a curved portion, the fabric will exhibit enhanced durability against stresses of compression, pulling, or bending. Another advantage of the curved metal fibers is that they easily come into transverse contact with one another, reducing the electrical resistance.

The curvature radius is calculated as follows. First, in an SEM image of the metallic nonwoven fabric, both ends of a metal fiber are connected by a straight line, and the length of the line, known as the chord length, is measured. Then, an auxiliary line is drawn perpendicular to the straight line (chord) from the midpoint of the chord toward the metal fiber. The distance from the midpoint to the intersection with the metal fiber (arc height) is measured. The curvature radius is obtained from calculus formula:

$$cr = (C \times C)/(8 \times ah) + ah/2$$

wherein cr is a curvature radius; C is a chord length; and ah is an arch height.

The above-specified curvature radius is preferably in the range of from 0.5 to 1,000 $\mu$m.

When a metal fiber is angularly bent, its shape is approximated as having a curved portion, and the curvature radius is then determined accordingly. When the straight line connecting the ends of a metal fiber intersects the fiber itself, this fiber is treated as separate fibers connected at the crossing intersection(s), and the curvature of each is measured.

The inclusion of particles with non-fibrous shapes in the metallic nonwoven fabric is not excluded. However, the metallic nonwoven fabric is designed according to the concept that fibers are randomly deposited to create a metallic nonwoven fabric with controlled interstices between fibers, it is preferable to minimize the presence of non-fibrous particles in the fabric in order to enhance the gas diffusibility in the fabric even when the fabric undergoes deformation, such as bending, elongation, and contraction.

To augment the gas diffusibility of the metallic nonwoven fabric, the metallic nonwoven fabric preferably has a pore size distribution with a peak pore size of 0.01 to 30 $\mu$m, more preferably 0.02 to 25 $\mu$m, even more preferably 0.05 to 20 $\mu$m, still more preferably 0.10 to 20 $\mu$m, and most preferably 0.15 to 15 $\mu$m, as measured by mercury porosimetry. When the distribution shows more than one peak, it is preferred for the peak pore size of the highest peak to fall within the above range, thereby enhancing the above advantage.

For pores, i.e., the interstices between metal fibers of 30 $\mu$m or smaller, the peak diameter of the distribution prepared by mercury porosimetry is read. For larger pores exceeding 30 $\mu$m, the pore is segmented into sub-pores during X-ray CT image analysis. The average equivalent spherical diameter of these sub-pores is used to estimate the pore size.

Mercury porosimetry is performed using Micromeritics Autopore IV9510 under the conditions of:

· mercury intrusion pressure: approx. 0.5 to 60,000 psi (approx. 3 kPa to 400 MPa)
· measurement mode: pressure ramp
· mercury contact angle: 141.3°
· mercury surface tension: 484 dyn/cm

The X-ray CT measurement is made using Bruker SKYSC AN2214, and image analysis software Aviso 3D from Thermo Fisher Scientific is used to obtain the average equivalent spherical diameter of sub-pores.

The aforementioned peak diameter of pore size distribution measured by mercury porosimetry and the average equivalent spherical diameter of sub-pores segmented from large pores on an X-ray CT image can be achieved by, for example, adjusting the average core diameter of the metal fibers, the coating thickness, and the average metal fiber length. They can also be achieved by intentionally blending two or more types of metal fibers that differ in average core diameter, coating thickness, or average fiber length. In addition to or in place of this, they can be achieved by properly adjusting the manufacturing conditions for the metallic nonwoven fabric as will be described later.

In a general water electrolysis reaction, the gas produced during the reaction remains on the surface of the electrode catalyst. As a result, the effective surface area of the electrode catalyst is reduced, leading to a decrease in the reaction efficiency of the water electrolysis reaction process. In contrast, the metallic nonwoven fabric of the invention exhibits high gas diffusibility due to its moderately sized pores. This design reduces the likelihood of reaction efficiency reduction attributed to the decrease in effective surface area, so that the metallic nonwoven fabric maintains high catalytic activity.

A water electrolysis electrode catalyst composed of a metallic nonwoven fabric with larger pores than moderate pores exhibits superior gas diffusibility but inferior catalyst efficiency due to the reduced surface area of the metallic nonwoven fabric.

The metallic nonwoven fabric preferably has an average thickness of 3 $\mu$m to 50 mm, more preferably 50 $\mu$m to 30 mm, and even more preferably 90 $\mu$m to 10 mm. The metallic nonwoven fabric with a thickness of at least 3 $\mu$m is capable of standing by itself, exhibiting high practical usefulness. The metallic nonwoven fabric with a thickness of 50 mm or smaller exhibits reliable gas diffusibility, providing improved catalytic activity.

The average thickness of the metallic nonwoven fabric can be measured by the following method. A 2 cm by 2 cm piece is cut out of the metallic nonwoven fabric. If it is difficult to prepare a cut piece of that size, a cut piece as close as possible to that size is prepared. The cut piece is placed on a flat plate, and another flat plate, weighing one gram and larger in size than the cut piece, is placed thereon. The distance between the lower surface of the lower plate and the upper surface of the upper plate is measured with a vernier caliper. The total thickness of the upper and lower plates, as previously measured, is subtracted from the measured distance to determine the thickness of the metallic nonwoven fabric. The thickness measurement was taken on three cut pieces of the fabric from different sites, and the average of the measurements is defined as the average thickness.

When the fabric's thickness exceeds 10 $\mu$m, it is measured using a vernier caliper as above. If the thickness is 10 $\mu$m or less, the average thickness is determined from a cross-sectional SEM image.

To accelerate the reaction on the surface of the metal fibers more effectively and improve the gas diffusibility thereby enhancing the catalytic activity of the metallic nonwoven fabric, the specific surface area of the fabric is preferably 0.02 to 22 $m^2$/g, more preferably 0.1 to 10 $m^2$/g, even more preferably 0.2 to 3 $m^2$/g, and most preferably 0.25 to 2 $m^2$/g.

The specific surface area of the metallic nonwoven fabric can be determined by the following method.

For metallic nonwoven fabrics with a specific surface area of 0.1 $m^2$/g or larger, their specific surface areas are determined by the krypton adsorption multiple-point BET method using, for example, a specific surface area/pore size distribution measurement instrument BELSORP-max from BEL Japan Inc. For fabrics with a specific surface area of less than 0.1 $m^2$/g, an X-ray CT measurement is performed using, for example, a nanofocus X-ray CT scanner SKYSC AN2214 from Bruker. The resulting 3D information is analyzed to obtain the specific surface area using image analysis software Aviso 3D from Thermo Fisher Scientific that quantifies the structural features of a steric object to be analyzed, such as the area and volume.

The specific surface area of the metallic nonwoven fabric can be adjusted by using metal fibers that differ in average core diameter or coating thickness to make up the fabric or by stacking a plurality of metallic nonwoven fabrics of different kinds.

To accelerate the reaction on the surface of the metal fibers more effectively and improve the diffusibility of the gas generated during the reaction thereby enhancing the catalytic activity of the metallic nonwoven fabric, the metallic nonwoven fabric preferably has an apparent density of 0.01 to 2.0 g/cm³, more preferably 0.05 to 1.7 g/cm³, and even more preferably 0.1 to 1.4 g/cm³.

The apparent density can be determined by calculating the volume V1 of the fabric from the length and width, and the thickness as measured above, measuring the mass of the fabric, and dividing the mass by the volume V1.

The apparent density of the metallic nonwoven fabric is adjustable by, for example, increasing the average core diameter or coating thickness of the metal fibers, increasing the average thickness of the metal fibers, or stacking two or more different metallic nonwoven fabrics.

The metallic nonwoven fabric may have a multi-layer structure provided that the overall structure exhibits sufficient catalytic activity and corrosion resistance. For instance, it may be a three-layered stack composed of one or more layers of mesh or perforated foil interposed between two metallic nonwoven fabrics, or a three- or more layered stack composed of a metal nonwoven fabric interposed between two layers of mesh or perforated foil. These layered structures can enhance the strength of the metallic nonwoven fabric.

The average aperture, specified in JIS Z8801, of the mesh or the average perforation diameter of the perforated foil is preferably 900 μm or less. The mesh or perforated foil may be made of either metal or non-metal. The metal that forms metal mesh or perforated foil may be the same as or different from the metals constituting the metallic nonwoven fabric.

A preferred method for manufacturing the metallic nonwoven fabric of the invention will then be described. The metal fiber that primarily constitutes the metallic nonwoven fabric is suitably produced by a method including first forming base fibers of the first metal (which correspond to the cores of the metallic nonwoven fabric), depositing the base fibers into a sheet form as a nonwoven fabric precursor, and forming a coating containing the second metal and/or its compound on the surface of the bae fibers.

The base fibers, which are made of the first metal and will be referred to as the first metal fibers unless the context clearly indicates otherwise, can be formed by an electroless or electrolytic process. The electroless fiber formation can be carried out according to, for example, the method reported in ACS Appl. Mater. Interfaces, 2017, 9, 34715-34721.

When the first metal fibers are produced by electrolysis, an electrolyte containing a source of the first metal is used, and the first metal fibers deposit onto the cathode through electrolytic reduction. By selecting appropriate additives and performing electrolytic reduction under suitable conditions, fibers with low agglomeration can be readily obtained. When the thus produced fibers are deposited and fired, they can be easily sintered at low temperatures to form the nonwoven fabric precursor with ease. Additionally, the electrolytic production process allows for easy control over the shape of the resulting base fibers. Furthermore, the electrolyte can be reused repeatedly. That is, the liquid required to produce the fibers is minimized, reducing the amount of the liquid waste that needs to be disposed of at one time. Given these considerations, the electrolytic process is preferably used in the invention.

In the electrolytic production of the first metal fibers, an anode and a cathode are immersed in a sulfuric acid acidic electrolyte containing a source of the first metal, and a direct current is applied to conduct electrolytic reduction. A preferred current density is in the range 50 to 600 A/m². In the subsequent process for forming the nonwoven fabric precursor, the fibrous deposit is scraped off the cathode to make a slurry of the fibers.

One or two or more of metal elements can be used as the first metal.

In the production of the first metal fibers according to the aforementioned procedure, the electrolytic reduction is preferably carried out with an oily substance present on the cathode surface. When the metal element ions are reduced under such a condition, the electrolytic reduction reaction occurring on the electrode is controllable.

The oily substance applied to the cathode for the first metal fiber production includes various organic compounds that are sparingly soluble or insoluble in water and, after adhesion to the cathode, exhibit moderate viscosity enough to be held to the cathode surface. Examples of such organic compounds include aliphatic hydrocarbons, aromatic hydrocarbons, aliphatic alcohols, aromatic alcohols, aliphatic aldehydes, aromatic aldehydes, aliphatic ethers, aromatic ethers, aliphatic ketones, aromatic ketones, aliphatic carboxylic acids and their salts, aromatic carboxylic acids and their salts, aliphatic carboxylic amides, aromatic carboxylic amides, aliphatic carboxylic esters, and aromatic carboxylic esters, provided that they are sparingly soluble or insoluble in water. Preferred of them are higher fatty acids and their salts, esters, and amides; and organic solvents obtained by mixing them. The higher fatty acids may be either monobasic or polybasic. The higher fatty acids include saturated or unsaturated aliphatic carboxylic acids preferably with 10 to 25, more preferably 10 to 22, and even more preferably 11 to 20, carbon atoms.

The method for attaching the oily substance to the cathode surface includes applying the oily substance directly to the cathode, placing the cathode in a container filled with the oily substance, and floating the oily substance on the surface of the electrolyte, in which the cathode is then immersed through the floating layer of the oily substance. Another method involves suspending the oily substance in the electrolyte, followed by stirring thereby to cause the suspended oily substance to collide with the cathode and remain thereon. When the oily substance has the property of dissolving in small quantities in the electrolyte, the oily substance that once dissolves in the electrolyte will continuously adsorb onto the electrode surface even if the oil droplets, which are composed mainly of the oily substance in the suspension of the oily substance in the electrolyte, are not brought into direct contact with the electrode. In this case, the same effect is achieved as when the oily droplets directly contact the electrode.

In the production of the first metal fibers, the amount of the oily substance attached per unit surface area of the cathode is preferably 1 to 500 $g/m^2$, more preferably 3 to 200 $g/m^2$, and even more preferably 5 to 100 $g/m^2$.

The deposited fibers of the first metal are then allowed to stand and settle, thereby forming the nonwoven fabric precursor. In detail, the slurry containing the first metal fibers is poured into a water-impervious mold. The mold is then left to stand, allowing the fibers to settle. Subsequently, the supernatant is removed from the mold, and the remaining sediment is dried to provide a nonwoven fabric precursor. Removal of the supernatant is achieved by, for example, centrifugation, decantation, or vaporization. The size of the mold may be substantially equal to or be larger than that of the metallic nonwoven fabric to be produced. By adjusting the amount of the slurry to be poured into the mold or the concentration of the fibers in the slurry, the resulting metallic nonwoven fabric can be tailored to have a desired pore size or porosity.

Alternatively, the nonwoven fabric precursor can be obtained by passing the slurry of the first metal fibers through a filter to deposit the fibers on the filter and drying the deposit.

In either method, the drying process is carried out in an air or inert gas atmosphere. The nonwoven fabric precursor thus formed contains pores because the constituent metal fibers are very thin and long.

Thereafter, where needed, the nonwoven fabric precursor may be compressed in its thickness direction using a press machine. The thickness of the metallic nonwoven fabric can be adjusted by this compression process. The compression process is also used to adjust the pore size or porosity of the metallic nonwoven fabric as desired by varying the conditions, including the compressing pressure, time, and temperature. The compression process may be carried out by, for example, removing the nonwoven fabric precursor from the mold, surrounding the precursor on its four sides by metal plate spacers with a designed thickness, and pressing the precursor from above the spacers. By adjusting the amount of the slurry to be poured into the mold or the concentration of the fibers in the slurry, the resulting metallic nonwoven fabric can be tailored to have a desired pore size or porosity.

To obtain the metallic nonwoven fabric with a desired pore size and porosity, the compressing pressure applied to the nonwoven fabric precursor is preferably 0.01 to 50 MPa, more preferably 1 to 30 MPa, and even more preferably 1 to 20 MPa.

From the same perspective as mentioned above, the compression time is preferably 3 minutes to 5 hours, more preferably 10 minutes to 3 hours, and even more preferably 30 minutes to 2 hours.

The nonwoven fabric precursor may be heated or not be heated during the compression process. To prevent excessive fusion bonding among the metal fibers, the heating temperature is preferably not higher than 500°C, more preferably 350°C or lower.

After the nonwoven fabric precursor is dried, or after it is compressed in its thickness direction, it may be, if desired, fired in an argon or nitrogen atmosphere or a hydrogen-containing atmosphere with no pressure applied. In the firing process, the first metal fibers in the fabric precursor are fusion bonded to each other at their intersections. In cases where a reduction of the surface of the first metal fibers is necessary for the fusion bonding, the precursor is fired in a hydrogen-containing atmosphere with no pressure applied. Since the first metal fibers are very fine and long, they are susceptible to oxidation on their surface. Therefore, it is advantageous to reduce the metal fiber surface by firing the precursor. When the first metal fibers are formed by the above-described electrolytic method, the reduction firing of the precursor provides the advantage that at least part of the metal fibers in the precursor become easier to fusion bond.

To achieve optimal efficiency in reducing the surface oxide and fusion-bonding among the first metal fibers, the time of firing the nonwoven fabric precursor is preferably 3 minutes to 24 hour and more preferably 30 minutes to 5 hours. To reduce the metal efficiently thereby fusion bonding the first metal fibers moderately, the firing temperature is preferably 800°C or lower and more preferably 150° to 500°C.

Then, a coating containing the second metal and/or its compound is formed on the surface of the first metal fibers making up the nonwoven fabric precursor. The method for forming the coating on the first metal fibers is not particularly limited. Examples of the method include processes involving physical or chemical application of fine particles. These processes include electrolytic plating in an electrolyte containing a source of the second metal, cation electrodeposition coating, anion electrodeposition coating, surface oxidation treatments (the surface is oxidized electrically or chemically and caused to react with a chemical substance in a liquid to form a coating film), displacement plating, electroless plating, a method of plating a target material on the nonwoven fabric precursor after attaching the catalyst for the displacement plating or the electroless plating to the nonwoven fabric precursor, liquid phase deposition, electrophoresis, processes taking advantage of a surface potential difference, sol-gel processes, gel-sol processes, polyol processes, evaporation, sputtering, CVD, thermal decomposition, plasma-assisted film formation, dipping, spraying, cold spraying, spray drying, atomic layer deposition, coating, ink-based deposition, and dry processes. To increase the surface area of the metallic nonwoven fabric, fine particles with a large surface area can be used.

Among these coating techniques, electrolytic plating is preferred for producing the metallic nonwoven fabric of the invention. The electrolytic plating process allows for uniform coating in a short time. Furthermore, this process is expected to form a coating in which the electrochemically highly active surface of the second metal is preferentially exposed.

When an electrolytic plating process is adopted, the coating is formed by depositing the second metal and/or its compound on the surface of the fibers constituting the nonwoven fabric precursor by, for example, electrolytic reduction in an electrolyte containing a source of the second metal. The electrolytic reduction is carried out by using the nonwoven fabric precursor as a cathode, for example. The electrolytic reduction process involves immersing the cathode and an anode in an electrolyte containing a second metal source and applying a direct current therebetween. A preferred current density range is from 50 to 1,500 A/m$^2$. The thickness of the coating to be formed is adjusted by controlling the current density and the plating duration.

The second metal and/or its compound is defined as an elemental metal including one or two or more of metal elements and/or a compound containing one or two or more of the metal elements.

The ion concentration of the second metal source in the electrolyte is preferably 10 to 140 g/L, more preferably 20 to 100 g/L, and even more preferably 40 to 70 g/L.

The resulting metallic nonwoven fabric may be cut to a desired shape. A plurality of the metallic nonwoven fabrics may be stacked to make a multi-layer metallic nonwoven fabric.

The metallic nonwoven fabric produced by the above-described method exhibits sufficient catalytic activity and sufficient corrosion resistance withstanding a water electrolysis reaction environment.

A catalyst containing the metallic nonwoven fabric of the invention produced by the above-described method is applicable to water electrolysis reactions. The water electrolysis electrode catalyst containing the metallic nonwoven fabric of the invention is suitably used because of its excellent catalytic activity and corrosion resistance. The type of water electrolysis to which the metallic nonwoven fabric of the invention is applied as an electrode catalyst is not limited. For example, the metallic nonwoven fabric of the invention finds application in alkaline water electrolysis, proton exchange membrane water electrolysis, anion exchange membrane water electrolysis, and the like. The water electrolysis electrode catalyst including the metallic nonwoven fabric of the invention may be either incorporated into a water electrolysis electrode or processed into the form of a water electrolysis electrode, which can be incorporated into a water electrolyzer. In instances where the metallic nonwoven fabric of the invention is incorporated into a water electrolysis electrode or processed into the form of a water electrolysis electrode, it is desirable that the pores in the metallic nonwoven fabric be retained to ensure optimal catalytic activity.

While the invention has been described with reference to its preferred embodiments, it should be understood that the invention is not limited thereto.

The aforementioned embodiments of the invention include the following clauses:

[1] A metallic nonwoven fabric for a water electrolysis electrode comprising metal fibers,

wherein the metal fibers comprise:

a core comprising a first metal; and
a coating disposed on a surface of the core and comprising a second metal and/or a compound of the second metal,

the first metal comprises one or two or more of metal elements,
the second metal and/or the compound of the second metal comprises one or two or more of metal elements and/or a compound containing one or two or more of the metal elements,
the second metal and/or the compound of the second metal has catalytic activity and corrosion resistance in a water electrolysis reaction environment, and
the metallic nonwoven fabric has an M2/S ratio within the range of 0.01 to 20.0 g/m$^2$,
wherein M2 is the sum of the mass of the second metal and the mass of the metal element present in the form of the compound of the second metal in the coating per unit mass of the metallic nonwoven fabric; and
S is a geometric area of the surface of the core per unit mass of the metallic nonwoven fabric.

[2] A metallic nonwoven fabric comprising metallic fibers,

wherein the metallic fibers comprise:

a core comprising a first metal; and
a coating disposed on a surface of the core and comprising a second metal and/or a compound of the second metal,

the first metal comprises one or two or more of metal elements,
the second metal and/or the compound of the second metal comprises one or two or more of metal elements and/or a compound containing one or two or more of the metal elements,
the second metal and/or the compound of the second metal has catalytic activity and corrosion resistance in a water electrolysis reaction environment,
and the coating has a thickness T of 5 to 1,500 nm.

[3] The metallic nonwoven fabric as set forth in clause 1 or 2, wherein the first metal has a higher electrical conductivity than the second metal and/or the compound of the second metal.

[4] The metallic nonwoven fabric as set forth in any one of clauses 1 to 3, wherein a proportion of the metal element present as the first metal relative to the total of the metal element present as the first metal, the metal element present as the second metal, and the metal element present in the form of the compound of the second metal as determined by X-ray photoelectron spectroscopy is 5.0 at.% or less.

[5] The metallic nonwoven fabric as set forth in any one of clauses 1 to 4, having a pore size distribution with a peak pore size of 0.01 to 30 $\mu$m as measured by mercury porosimetry.

[6] The metallic nonwoven fabric as set forth in any one of clauses 1 to 5, wherein the core has an average diameter of 20 nm to 10 $\mu$m.

[7] The metallic nonwoven fabric as set forth in any one of clauses 1 to 6, wherein the ratio of the coating thickness T to the average core diameter D, T/D, is 0.01 to 1.00.

[8] The metallic nonwoven fabric as set forth in any one of clauses 1 to 7, wherein the metal fibers have an average length of 0.5 to 5000 $\mu$m.

[9] The metallic nonwoven fabric as set forth in any one of clauses 1 to 8, wherein the proportion of the metal element present as the second metal relative to the sum of the metal element present as the second metal and the metal element present as the second metal compound in the coating as determined by X-ray photoelectron spectroscopy is at least 2.0 at.%.

[10] The metallic nonwoven fabric as set forth in any one of clauses 1 to 9, wherein the first metal is copper, silver, gold, aluminum, magnesium, nickel, cobalt, tin, iron, zinc, or an alloy containing at least one of them.

[11] The metallic nonwoven fabric as set forth in any one of clauses 1 to 10, wherein the second metal and/or its compound contains at least one element selected from nickel, cobalt, iron, molybdenum, tungsten, vanadium, zirconium, titanium, aluminum, platinum, iridium, palladium, rhodium, gold, and silver.

[12] A water electrolysis electrode catalyst including the metallic nonwoven fabric as set forth in any one of clauses 1 to 11.

[13] A water electrolyzer comprising the water electrolysis electrode catalyst as set forth in clause 12.

## Examples

The invention will now be illustrated with reference to Examples, but it should be understood that the invention is not deemed to be limited thereto. Unless otherwise specified, all the percentages are given by mass. In Table 1, "N.D." means not determined.

### Example 1

A metallic nonwoven fabric was produced using copper as the first metal and nickel as the second metal.

An electrolyte containing 40 g/L of copper ions and 19.6 g/L of free sulfuric acid was prepared using copper sulfate and sulfuric acid. An 800 mL portion of the electrolyte was poured into an electrolysis cell (10 by 8 by 12 centimeters; capacity: 1000 mL) and stirred. The temperature of the electrolyte was 40°C. An 8 by 8 cm copper plate was used as a cathode. The cathode was coated with 7 g/m$^2$ of oleic acid. An 8 cm by 8 cm copper plate was used as an anode. The two electrodes were suspended 8 cm apart in the electrolytic cell.

Electrolysis was performed at a controlled current density of 313 A/m$^2$ for 30 minutes to deposit fibrous copper onto the cathode surface. Having a low degree of agglomeration, the deposited fibrous copper could be easily scraped off.

The scraped fibrous copper was dispersed in 2-propanol to prepare a slurry with a fibrous copper concentration of 100 g/L. A 2.34 mL portion of the slurry was poured into a mold (50 mm by 12 mm by 15 mm (t)) with its bottom formed of a titanium plate. The mold was left to stand at room temperature (25°C) for 1 hour to allow the fibrous copper to settle. The supernatant was removed, and the residual organic solvent was removed by evaporation. The sediment in the mold was dried in vacuo at room temperature (25°C) for 12 hours. The solid was then fired in a hydrogen-containing atmosphere (3 vol% H$_2$ with the rest of N$_2$) with no pressure applied at 350°C for 1.5 hours to yield a metallic nonwoven fabric.

Subsequently, a coating was formed by electrolysis plating. The plating solution used in this process was a Watts bath having a nickel sulfate concentration of 0.84 mol/L, a nickel chloride concentration of 0.13 mol/L, and a boric acid concentration of 0.49 mol/L. In a plating tank was put 800 mL of the plating solution and stirred. The temperature of the plating solution was 40°C.

The nonwoven fabric precursor measuring 50 mm by 12 mm was sandwiched in between two copper meshes (20 mesh) measuring 70 by 20 mm to make a cathode. A nickel plate measuring 70 by 20 mm was used as an anode. The cathode and anode were suspended 3 cm apart in the plating tank. Electrolysis was performed at a controlled current density of 538 A/m$^2$-area of the nonwoven fabric precursor for 416 seconds to plate the cathode inclusive of the meshes. A metallic nonwoven fabric for a water electrolysis electrode was thus obtained, which was composed of metal fibers each having a core covered by a coating. The thickness of the metallic nonwoven fabric was 1 mm.

The coating of the metallic nonwoven fabric was found to contain not only metallic nickel as the second metal but also NiO and Ni(OH)$_2$ as second metal (nickel) compounds.

## Examples 2 to 6

A metallic nonwoven fabric for water electrolysis electrodes, having a nickel coating on the core of metal fibers, was produced in the same manner as in Example 1, except for changing the electrolytic plating time in the electrolytic plating process as shown in Table 1.

In every Example, the thickness of the nonwoven fabric was 1 mm, and the coating of the metallic nonwoven fabric contained NiO and Ni(OH)$_2$ as a nickel compound as well as elemental nickel.

## Comparative Example 1

An uncoated metallic nonwoven fabric for water electrolysis electrodes was produced in the same manner as in Example 1, except that the electrolytic plating was omitted.

## Comparative Example 2

To confirm the effectiveness of a metallic nonwoven fabric containing the first metal in the core and the second metal element in the coating, a porous metallic body Ni Celmet® (from Sumitomo Electric Industries, Ltd.) that is made of nickel was used instead of the metallic nonwoven fabric. The Ni Celmet was cleaned by ultrasonication in a 1 mol/L hydrochloric acid aqueous solution for 1 hour, then washed with water, and air-dried in the atmosphere. The cleaned Ni Celmet was cut into a 50 by 25 mm piece to prepare an uncoated catalyst for water electrolysis electrodes.

## Evaluation 1:

The average core diameter (D), coating thickness (T), average metal fiber length, and thickness of each of the metallic nonwoven fabrics obtained in Examples were measured in accordance with the respective methods described above. The T/D ratio and the aspect ratio of the metal fibers were calculated from these measurements. For the metallic nonwoven fabrics of Examples 1 to 5, an M2/S ratio was calculated, where M2 is the sum of the masses of the second metal and the metal element present in the form of a second metal compound in the coating per unit mass of the metallic nonwoven fabric; and S is the geometric area of the core surface per unit mass of the metallic nonwoven fabric. In this calculation, M1 and M2 are values evaluated using XRF according to the method described above. The metallic nonwoven fabric for a water electrolysis electrode and the cleaned Ni Celmet prepared in Comparative Examples were also measured for average diameter D, thickness of the metallic nonwoven fabric, and average metal fiber length. The aspect ratio of the metal fibers was calculated from these measurements. The average diameter D of the cleaned Ni Celmet was determined using an optical microscope (Digital Microscope VHX-900 from Keyence) and image processing software (Image J). The measurement was taken at 10 points, and the arithmetic average was obtained. The other measurement items were measured using the above-described methods. The cleaned Ni Celmet of Comparative Example 2 was considered a continuous fiber, making average fiber length measurement difficult. Therefore, the average fiber length and aspect ratio of the cleaned Ni Celmet in Table 2 were described as "continuous".

For the metallic nonwoven fabrics for water electrolysis electrodes obtained in Examples 1 to 5, the proportion (A) of the metal element present as the first metal relative to the total of the metal element present as the first metal, the metal element present as the second metal, and the metal element present as the second metal compound was calculated using XPS. The results obtained are shown in Table 1. The proportion (B) of the metal element present as the second metal (i.e., elemental nickel) and the proportion (C) of the metal element present as the second metal compound (i.e., nickel oxide and nickel hydroxide) relative to the sum of the metal element present as the second metal and the metal element present as the second metal compound were determined using XPS. The results are shown in Table 3.

The proportions (A), (B), and (C) were calculated using the following formulae:

Proportion (A) = (peak area of metal element present as first metal)/((peak area of metal element present as first metal) + (peak area of metal element present as second metal) + (peak area of metal element present as second metal compound) Proportion (B) = (peak area of metal element present as second metal)/((peak area of metal element present as second metal) + (peak area of element present as second metal compound) Proportion (C) = (peak area of Ni element present as NiO or Ni(OH)$_2$)/((peak area of metal element present as second metal) + (peak area of metal element present as second metal compound)

The conditions in the XPS analysis were:

· equipment: PHI Quantes from Ulvac-PHI, Inc.
· exciting X-ray: monochromated Al-K$\alpha$ rays (1486.7 eV)
· output power: 25 W
· accelerating voltage: 15 kV
· beam diameter: 100 $\mu$m$\varphi$
· analysis area: 1000 $\times$ 300 $\mu$m$^2$
· detection angle: 45°
· pass energy: 26.0 eV
· energy step: 0.1 eV/step

The resulting XPS data were analyzed using data analysis software MultiPak ver. 9.9 from Ulvac-PHI, Inc., with an iterated Shirley background subtraction method.
The following energy values were utilized for the peak assignment in the XPS measurement:

· Ni: 852.7 eV
· NiO: 854.0 eV
· Ni(OH)$_2$: 855.7 eV
· Ni$_2$O$_3$: 856.6 eV
· Cu: 933 Ev

**Evaluation 2:**

The metallic nonwoven fabrics for water electrolysis electrodes and the cleaned Ni Celmet prepared in Examples and Comparative Examples were evaluated for oxygen evolution reaction (OER) overpotential by the method below.
Linear sweep voltammetry (LSV) was performed using an electrochemical measurement system HZ-7000 from Hokuto Denko Corp. Each of the metallic nonwoven fabrics and cleaned Ni Celmet of Examples and Comparative Examples was used as a working electrode. The working electrode was sized so that the portion immersed in the electrolyte measured 10 mm vertically and 5 mm horizontally. An Hg/HgO foil was used as a reference electrode and a Pt foil as a counter electrode. The OER overpotential in an alkaline solution was evaluated by LSV. The OER current was recorded under nitrogen bubbling at room temperature in a 1 mol/L potassium hydroxide solution at a scanning speed of 10 mV/s. After one initial cyclic voltammetry cycle, LSV measurements were performed four times by sweeping from 0.9 V to 1.6 V vs. the reversible hydrogen electrode (RHE) in the anodic direction to activate the electrode surface. Subsequently, LSV was performed four times by sweeping from 1.6 V to 0.9 V vs. RHE in the cathodic direction. The OER current was recorded starting from the fourth LSV measurement with a cathodic sweep. The potential value under half-cell conditions was converted to the RHE scale according to $E_{RHE} = E_{Hg/HgO} + 0.9$ V. The results obtained are shown in Tables 1 and 2.

**Evaluation 3:**

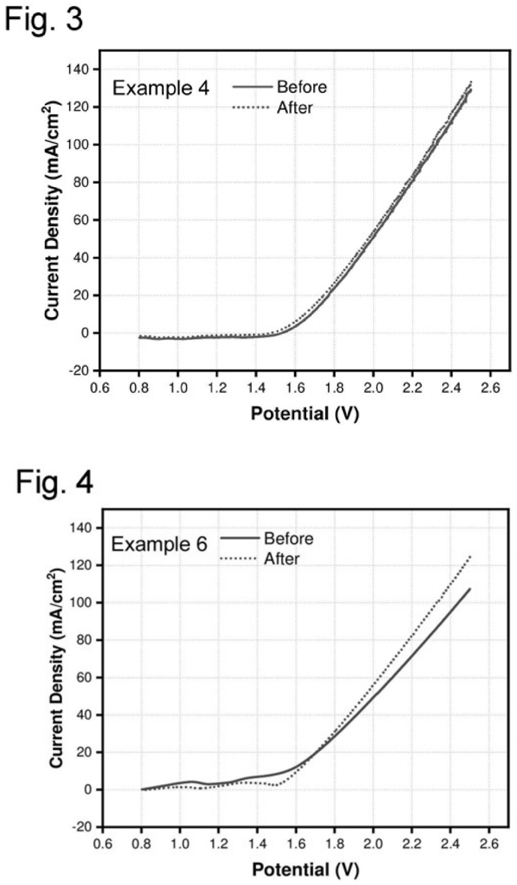

The metallic nonwoven fabrics of Examples 1, 4, and 6 were evaluated for electrochemical durability by potential cycling. The evaluation used a two-electrode system with the metallic nonwoven fabric as the anode. The cathode was a gas diffusion layer (Sigracet 22BB from SGL Carbon) carrying 1 mg/cm$^2$ of a platinum catalyst (TEC10E50E from Tanaka Precious Metal, Technologies Co., Ltd.) on its microporous layer. The measurements were performed in a 1 mol/L potassium hydroxide solution under nitrogen bubbling at room temperature. LSV was conducted four times by sweeping from 0.8 V to 2.5 V at a scanning speed of 10 mV/s in the anodic direction, followed by four cycles from 2.5 V to 0.8 V in the cathodic direction. The water electrolysis current recorded during the fourth LSV measurement in the cathodic sweep was taken as the initial (before-durability-test) performance. Next, the potential range was set from 0.1 V to 2.5 V, and 1,000 potential cycles were applied at a scanning speed of 100 mV/s. After the durability test, the water electrolysis current was recorded in the same manner as before the durability test, and the result was taken as the performance after the durability test. The stability of the metallic nonwoven fabric against the potential cycling was evaluated by comparing the LSV curves between before and after the potential cycling. The results obtained are shown in Figs. 2 through 4.

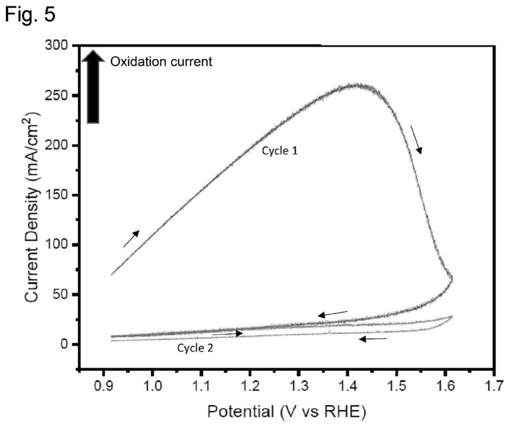

Fig. 5 is a cyclic voltammogram of Comparative Example 1, in which the first and second cycles are shown.

**Evaluation 4:**

Each of the metallic nonwoven fabrics prepared in Examples was evaluated in terms of the average electrical conductivity of the entire electrode. The average electrical conductivity was calculated using formulae (2) and (3) above in which the electrical conductivity $\sigma 1$ was $5.95 \times 10^7$ S/cm, and the electrical conductivity $\sigma 2$ was $1.43 \times 10^7$ S/cm. The results are shown in Table 4.

**Evaluation 5:**

The metallic nonwoven fabrics prepared in Examples 2, 3, and 4 were measured for pore size distribution by mercury porosimetry. The peak pore size of the highest peak was decided. The measurement was performed in accordance with the method described above. As a result, the peak pore sizes of the fabrics of Examples 2, 3, and 4 were found to be 14 $\mu$m, 13 $\mu$m, and 12 $\mu$m, respectively.

Table 1

| | | Ex. 1 | Ex. 2 | Ex. 3 | Ex. 4 | Ex. 5 | Ex. 6 |
|---|---|---|---|---|---|---|---|
| Electrolytic Plating Time (s) | | 416 | 832 | 1664 | 3328 | 6656 | 11360 |
| Avg. Core Diameter D ($\mu$m) | | 1.24 | 1.42 | 1.07 | 1.31 | 1.32 | 1.20 |
| Metallic Non-wove n Fabric | Form | non-w oven fabric | non-w oven fabric | nonwoven fabric | non-w oven fabric | nonwoven fabric | non-w oven fabric |
| | Coating Thickness T (nm) | 24 | 46 | 113 | 187 | 478 | 793 |
| | M2/S (g/m$^2$) | 0.29 | 0.62 | 1.20 | 2.92 | 5.50 | N.D. |
| | T/D | 0.02 | 0.03 | 0.11 | 0.14 | 0.36 | 0.66 |
| | Avg. Fiber Length ($\mu$m) | 64 | 67 | 62 | 54 | 57 | 60 |
| | Aspect Ratio | 51.1 | 47.0 | 58.1 | 41.3 | 43.2 | 50.1 |
| | Proportion (A)* (at.%) | 2.4 | 1.8 | 1.8 | 1.4 | 0.2 | N.D. |
| | OER Over-potential at 10 mA/cm$^2$ (mV) | 309 | 302 | 295 | 284 | 305 | 311 |
| *: Proportion of the metal element present as the first metal, determined by XPS | | | | | | | |

Table 2

| | Compa. Ex. 1 | Compa. Ex. 2 |
|---|---|---|
| Form | nonwoven fabric | foam |
| Composition | Cu | Ni |
| Coating | absent | absent |
| Avg. Fiber Diameter D ($\mu$m) | 1.12 | 66.2 |
| Electrode Thickness (mm) | 1.2 | 1.2 |
| Avg. Fiber Length ($\mu$m) | 68 | continuous |

(continued)

|  | Compa. Ex. 1 | Compa. Ex. 2 |
|---|---|---|
| Aspect Ratio | 60.4 | continuous |
| OER Over-potential at 10 mA/cm$^2$ (mV) | 351 | 318 |

Table 3

|  | Ex. 1 | Ex. 2 | Ex. 3 | Ex. 4 | Ex. 5 |
|---|---|---|---|---|---|
| Proportion (B)[*1] (at.%) | 3.1 | 6.3 | 4.2 | 6.5 | 13.4 |
| Proportion (C-1)[*2] (at.%) | 6.4 | 13.0 | 12.3 | 14.1 | 17.1 |
| Proportion (C-2)[*3] (at.%) | 90.5 | 80.7 | 83.5 | 79.4 | 69.5 |

*1: Proportion of the metal element present as the second metal (Ni)
*2: Proportion of the metal element present as the second metal compound (NiO)
*3: Proportion of the metal element present as the second metal compound (Ni(OH)$_2$)

Table 4

|  | Ex. 1 | Ex. 2 | Ex. 3 | Ex. 4 | Ex. 5 | Ex. 6 |
|---|---|---|---|---|---|---|
| Coating Thickness T (nm) | 24 | 46 | 113 | 187 | 478 | 793 |
| Avg. Diameter D ($\mu$m) | 1.24 | 1.42 | 1.07 | 1.31 | 1.32 | 1.20 |
| Coating/Core Volume Ratio R | 0.08 | 0.13 | 0.47 | 0.65 | 1.97 | 4.39 |
| Conductivity $\sigma 1$ ($10^7$ S/m) | 5.95 | 5.95 | 5.95 | 5.95 | 5.95 | 5.95 |
| Conductivity $\sigma 2$ ($10^7$ S/m) | 1.43 | 1.43 | 1.43 | 1.43 | 1.43 | 1.43 |
| Avg. Conductivity $\sigma$av ($10^7$ S/m) | 5.62 | 5.42 | 4.51 | 4.17 | 2.95 | 2.27 |

As shown in Tables 1 and 2, the metallic nonwoven fabrics of Examples have a lower OER overpotential than the metallic nonwoven fabric and the cleaned Ni Celmet of Comparative Examples, demonstrating their superior catalytic activity. As displayed in Figs. 2 to 4, the metallic nonwoven fabrics of Examples 1, 4, and 6 demonstrate substantially no increase in overpotential after 1,000 potential cycles. This proves that the nonwoven fabric of the invention exhibits sufficient corrosion resistance in a water electrolysis reaction environment.

In contrast, as seen from Table 2, the metallic nonwoven fabric of Comparative Example 1 and the cleaned Ni Celmet of Comparative Example 2 show a considerably high overpotential for OER. With regard to the metallic nonwoven fabric of Comparative Example 1, the oxygen evolution current was not detectable for the following reason: the absence of a coating resulted in a large oxidation current generated when the potential was increased over 1.23 V, at which OER occurs, in electrochemical measurement. Even when the potential was increased again, no current flow was observed. Furthermore, the metallic nonwoven fabric of Comparative Example 1 exhibited a darkened appearance following the electrochemical measurement. This is believed to be due to inactivation by surface oxidation.

As demonstrated in Table 3, the proportion of elemental nickel in the coating as measured by XPS increases with the M2/S ratio. It is therefore considered that the electrical conductivity of the coating also increases with the M2/S ratio. On the other hand, since the average electrical conductivity of the entire electrode decreases with an increase in the M2/S ratio as shown in Table 4, it is seen that the catalytic activity of a metallic nonwoven fabric for water electrolysis electrodes can be optimized by adjusting the M2/S ratio within an appropriate range as in the invention.

**Industrial Applicability**

The invention provides a metallic nonwoven fabric for water electrolysis electrodes that exhibits sufficient catalytic activity and corrosion resistance in a water hydrolysis reaction environment.

**Claims**

1. A metallic nonwoven fabric for a water electrolysis electrode comprising metal fibers,

wherein the metal fibers comprise:

a core comprising a first metal; and
a coating disposed on a surface of the core and comprising a second metal and/or a compound of the second metal,

the first metal comprises one or two or more of metal elements,
the second metal and/or the compound of the second metal comprises one or two or more of metal elements and/or a compound containing one or two or more of the metal elements,
the second metal and/or the compound of the second metal has catalytic activity and corrosion resistance in a water electrolysis reaction environment, and
the metallic nonwoven fabric has an M2/S ratio within the range of 0.01 to 20.0 $g/m^2$,
wherein M2 is the sum of the mass of the second metal and the mass of the metal element present in the form of the compound of the second metal in the coating per unit mass of the metallic nonwoven fabric; and
S is a geometric area of the surface of the core per unit mass of the metallic nonwoven fabric.

2. A metallic nonwoven fabric comprising metallic fibers,

wherein the metallic fibers comprise:

a core comprising a first metal; and
a coating disposed on a surface of the core and comprising a second metal and/or a compound of the second metal,

the first metal comprises one or two or more of metal elements,
the second metal and/or the compound of the second metal comprises one or two or more of metal elements and/or a compound containing one or two or more of the metal elements,
the second metal and/or the compound of the second metal has catalytic activity and corrosion resistance in a water electrolysis reaction environment,
and the coating has a thickness T of 5 to 1,500 nm.

3. The metallic nonwoven fabric according to claim 1 or 2, wherein the first metal has a higher electrical conductivity than the second metal and/or the compound of the second metal.

4. The metallic nonwoven fabric according to claim 1 or 2, wherein a proportion of the metal element present as the first metal relative to the total of the metal element present as the first metal, the metal element present as the second metal, and the metal element present in the form of the compound of the second metal as determined by X-ray photoelectron spectroscopy is 5.0 at.% or less.

5. The metallic nonwoven fabric according to claim 1 or 2, having a pore size distribution with a peak pore size of 0.01 to 30 μm, the pore size distribution being measured by mercury porosimetry.

6. The metallic nonwoven fabric according to claim 1 or 2, wherein the core has an average diameter of 20 nm to 10 μm.

7. The metallic nonwoven fabric according to claim 1 or 2, having a ratio of a thickness T of the coating to an average diameter D of the core, T/D, is 0.01 to 1.00.

8. The metallic nonwoven fabric according to claim 1 or 2, wherein the metal fibers have an average length of 0.5 to 5,000 μm.

9. The metallic nonwoven fabric according to claim 1 or 2, wherein a proportion of the second metal relative to the sum of the metal element present as the second metal and the metal element present in the form of the compound of the second metal in the coating as determined by X-ray photoelectron spectroscopy is at least 2.0 at.%.

10. The metallic nonwoven fabric according to claim 1 or 2, wherein the first metal is copper, silver, gold, aluminum, magnesium, nickel, cobalt, tin, iron, zinc, or an alloy containing at least one of them.

11. The metallic nonwoven fabric according to claim 1 or 2, wherein the second metal and/or the compound of the second metal contains at least one metal element selected from nickel, cobalt, iron, molybdenum, tungsten, vanadium, zirconium, titanium, aluminum, platinum, iridium, palladium, rhodium, gold, and silver.

12. A water electrolysis electrode catalyst comprising the metallic nonwoven fabric according to claim 1 or 2.

13. A water electrolyzer comprising the water electrolysis electrode catalyst according to claim 12.

Fig. 1

Fig. 2

Fig. 3

Fig. 4

Fig. 5

## INTERNATIONAL SEARCH REPORT

| International application No. |
|---|
| **PCT/JP2024/024858** |

| A. | CLASSIFICATION OF SUBJECT MATTER |
|---|---|

*C25B 11/031*(2021.01)i; *C25B 11/052*(2021.01)i; *C25B 11/061*(2021.01)i; *C25B 11/077*(2021.01)i; *C25B 11/091*(2021.01)i
FI:  C25B11/031; C25B11/061; C25B11/052; C25B11/077; C25B11/091

According to International Patent Classification (IPC) or to both national classification and IPC

| B. | FIELDS SEARCHED |
|---|---|

Minimum documentation searched (classification system followed by classification symbols)

C25B11/031; C25B11/052; C25B11/061; C25B11/077; C25B11/091

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021/084935 A1 (CARLIT HOLDINGS CO., LTD.) 06 May 2021 (2021-05-06) example 1, paragraphs [0033]-[0035], [0037] | 1-13 |
| X | KR 10-2022-0091260 A (LT METAL CO., LTD.) 30 June 2022 (2022-06-30) paragraphs [0001], [0012], [0048], [0051] | 1-13 |
| A | JP 8-505903 A (OLIN CORP.) 25 June 1996 (1996-06-25) entire text | 1-13 |
| A | WO 2021/193467 A1 (RIKEN) 30 September 2021 (2021-09-30) entire text | 1-13 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 September 2024** | **24 September 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
**Information on patent family members**

International application No.

**PCT/JP2024/024858**

| Patent document cited in search report | | | Publication date (day/month/year) | Patent family member(s) | | | Publication date (day/month/year) |
|---|---|---|---|---|---|---|---|
| WO | 2021/084935 | A1 | 06 May 2021 | TW | 202118904 | A | |
| KR | 10-2022-0091260 | A | 30 June 2022 | (Family: none) | | | |
| JP | 8-505903 | A | 25 June 1996 | US<br>entire text<br>EP<br>CN<br>KR | 5294319<br><br>681617<br>1116860<br>10-1996-0700362 | A<br><br>A1<br>A<br>A | |
| WO | 2021/193467 | A1 | 30 September 2021 | US<br>entire text<br>EP<br>CN | 2023/0175152<br><br>4130339<br>115315543 | A1<br><br>A1<br>A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021070864 A

- CN 108447703 A

**Non-patent literature cited in the description**

- **F. YANG et al.** *Adv. Energy Matter*, 2020, vol. 10, 2001174

- *ACS Appl. Mater. Interfaces*, 2017, vol. 9, 34715-34721